# DEMANDE DE BREVET EUROPEEN

(11) **EP 2 343 747 A1**
(43) Date de publication de la demande: **13.07.2011**
(21) Numéro de dépôt: 10150488.4
(22) Date de dépôt: 12.01.2010
(51) Int. Cl.: H01L 41/113, G04C 10/00

(54) **Dispositif générateur d'énergie électrique pour appareil portable, notamment pour pièce d'horlogerie**

(71) Demandeur: Chevaux, Noah, 1010 Lausanne (CH)
(72) Inventeur: Chevaux, Noah, 1010 Lausanne (CH)
(74) Mandataire: Richard, François-Régis

(57) **Abrégé**

L'invention concerne un dispositif générateur d'énergie électrique pour appareil portable, destiné à produire de l'énergie électrique à partir d'une source d'énergie mécanique, comportant un organe mobile (1, 3), agencé pour présenter un mouvement périodique de fréquence sensiblement prédéfinie, et une source d'énergie mécanique reliée mécaniquement à l'organe mobile pour en entraîner le mouvement. Le dispositif comprend en outre au moins un micro-générateur électrique (5) et au moins deux contacts électriques (41, 44) reliés au micro-générateur électrique et entre lesquels une tension électrique est susceptible d'être générée, le micro-générateur électrique étant agencé pour produire de l'énergie électrique en réponse au mouvement périodique de l'organe mobile. Ainsi, il est possible de produire de l'énergie électrique de manière prévisible et à la demande, en fonction des besoins.

## Description

### Domaine technique

La présente invention concerne un dispositif générateur d'énergie électrique pour appareil portable, notamment pour pièce d'horlogerie, destiné à produire de l'énergie électrique à partir d'une source d'énergie mécanique, comportant un organe mobile et une source d'énergie mécanique reliée mécaniquement à l'organe mobile pour en entraîner le mouvement.

L'invention concerne également un appareil portable, notamment une pièce d'horlogerie ou encore un téléphone, muni d'un tel dispositif générateur électrique ainsi que d'un système électrique agencé pour fonctionner à partir de l'énergie électrique produite par ce dispositif.

### Etat de la technique

Des dispositifs de ce type ont déjà été divulgués dans le passé en relation avec des applications horlogères.

A titre d'exemple, la demande de brevet EP 0725452 A1 décrit un tel dispositif comprenant une lame vibrante revêtue de couches piézoélectriques et agencée de manière à être excitée en vibration à partir d'un mécanisme de remontage automatique de la pièce d'horlogerie correspondante.

La demande de brevet JP 52-127091 A décrit un dispositif générateur d'énergie électrique comportant une roue, entraînée à partir du mécanisme de remontage automatique de la pièce d'horlogerie correspondante et, agencée pour coopérer avec une ancre dont les palettes présentent des propriétés piézoélectriques. Les chocs subis par les palettes lorsque l'ancre arrête la roue après une phase de rotation donne lieu à une production d'énergie électrique.

Cependant, il faut noter que ces dispositifs présentent des limitations non seulement en termes de rendement mais également en termes d'efficacité globale dans le fonctionnement, dans la mesure où la production d'énergie électrique ne peut se faire lorsque la pièce d'horlogerie est immobile, soit lorsqu'elle n'est pas portée. Par ailleurs, lorsque la pièce d'horlogerie est portée, la production d'énergie électrique est inégale dans le temps puisqu'elle dépend du degré d'activité du porteur de la pièce. En outre, les phases de production d'énergie électrique ne coïncident pas forcément avec les moments où cette énergie est nécessaire en fonction du système électrique à alimenter.

### Divulgation de l'invention

Un but principal de la présente invention est de pallier les inconvénients des dispositifs de génération d'énergie électrique connus de l'art antérieur, en proposant un tel dispositif agencé pour produire une quantité d'énergie électrique suffisante par rapport aux besoins, de manière fiable et prévisible.

A cet effet, la présente invention concerne plus particulièrement un dispositif de génération d'énergie électrique du type mentionné plus haut, caractérisé par le fait que l'organe mobile est agencé pour présenter un mouvement périodique de fréquence sensiblement prédéfinie. En outre, il est prévu que le dispositif comprend au moins un, préférablement une pluralité de micro-générateurs électriques et au moins deux contacts électriques reliés aux micro-générateurs électriques et entre lesquels une tension électrique est susceptible d'être générée. Ces micro-générateurs électriques sont avantageusement agencés pour produire de l'énergie électrique en réponse au mouvement périodique de l'organe mobile.

Grâce à ces caractéristiques, le dispositif selon l'invention permet la production d'énergie électrique de manière stable et prévisible.

De manière préférée, les micro-générateurs électriques comprennent chacun un organe élastique présentant des propriétés piézoélectriques et agencé de manière à se déformer en réponse au mouvement périodique de l'organe mobile. Chaque organe élastique peut comprendre une poutre portant au moins une couche de matériau piézoélectrique. En complément ou en alternative, l'organe élastique peut être un ressort spiral.

Selon un mode de réalisation préféré, le dispositif comporte un bâti susceptible d'être assemblé à un mouvement horloger et est agencé pour fonctionner de manière autonome par rapport à ce dernier.

Par ailleurs, la source d'énergie mécanique peut avantageusement comprendre un barillet logeant un ressort susceptible d'être chargé par un utilisateur. A cet effet, l'appareil portable correspondant peut comporter un organe de commande externe, par exemple du type targette.

Grâce à ces caractéristiques, le ressort de barillet peut être chargé par l'utilisateur à chaque fois qu'il souhaite produire de l'énergie électrique pour alimenter le système électrique mis en oeuvre dans l'appareil portable. On peut avantageusement prévoir qu'une action sur l'organe de commande externe visant à charger la source d'énergie mécanique active simultanément le système électrique de l'appareil portable, de manière similaire à une montre à répétition.

De manière préférée, l'organe mobile comprend un balancier associé à un spiral, définissant un balancier-spiral susceptible de présenter des oscillations périodiques, le dispositif comportant un échappement agencé pour coopérer avec le balancier-spiral pour lui transmettre l'énergie mécanique délivrée par la source d'énergie mécanique et en entretenir les oscillations. Dans ce cas, l'échappement peut comporter une ancre associée à une roue d'échappement, tandis que les micro-générateurs peuvent être agencés sur le balancier, sur l'ancre, sur la roue d'échappement voire également ou alternativement sur le spiral.

Un tel oscillateur mécanique, fonctionnant indépendamment du mouvement horloger auquel il est associé permet d'optimiser la fréquence des oscillations et donc le rendement du dispositif. Ainsi, la fréquence est préférablement choisie au moins égale à 4Hz, plus préférablement à 20Hz, pour assurer une production suffisante d'énergie électrique.

De manière avantageuse, le système électrique alimenté par le dispositif peut comprendre un système d'éclairage, un affichage à cristaux liquides, un système communiquant, préférablement de type RFID, ou un système permettant d'authentifier la pièce d'horlogerie. Bien entendu, d'autres systèmes électriques adaptés peuvent être mis en oeuvre, en alternative, sans sortir du cadre de l'invention.

### Brève description des dessins

D'autres caractéristiques et avantages de la présente invention apparaîtront plus clairement à la lecture de la description détaillée de modes de réalisation préférés qui suit, faite en référence aux dessins annexés donnés à titre d'exemples non limitatifs et dans lesquels:

- la figure 1 représente une vue schématique partielle de face d'un premier mode de réalisation préféré du dispositif selon la présente invention;

- la figure 2 représente une vue en coupe simplifiée du dispositif de la figure 1;

- la figure 3a représente une vue schématique de dessus d'un détail de construction d'un dispositif selon une variante de réalisation;

- la figure 3b représente une vue schématique de dessous du détail de construction de la figure 3a;

- la figure 4a représente une vue de face simplifiée et agrandie d'un détail de la figure 3a, et

- la figure 4b représente une vue de face simplifiée et agrandie d'un détail de la figure 3b.

### Mode(s) de réalisation de l'invention

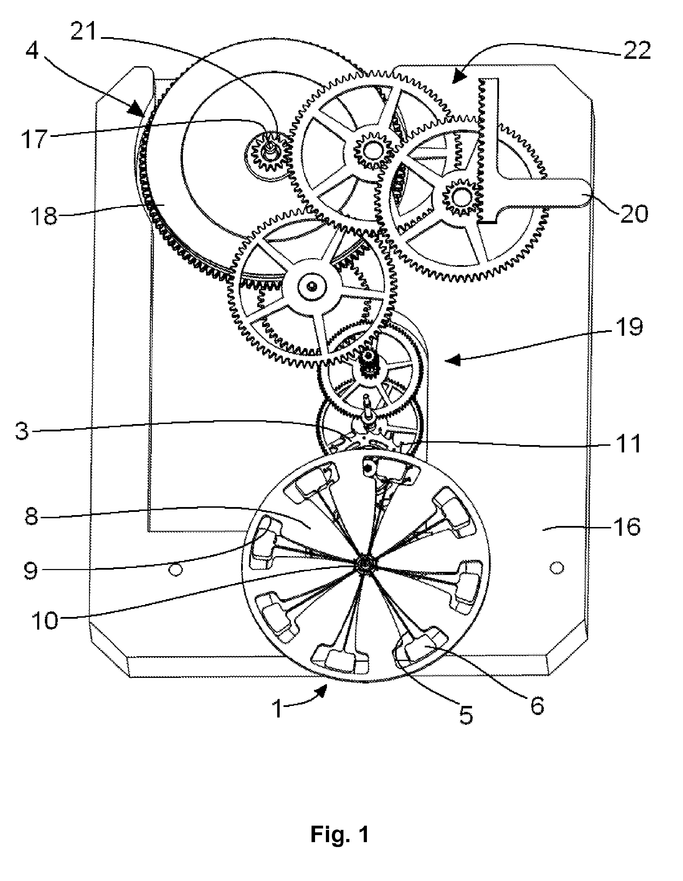

La figure 1 représente une vue schématique partielle de face d'un dispositif selon un premier mode de réalisation préféré de la présente invention.

Selon ce mode de réalisation, le dispositif générateur d'énergie électrique est réalisé sous la forme d'un module indépendant destiné à être assemblé à un mouvement horloger de base.

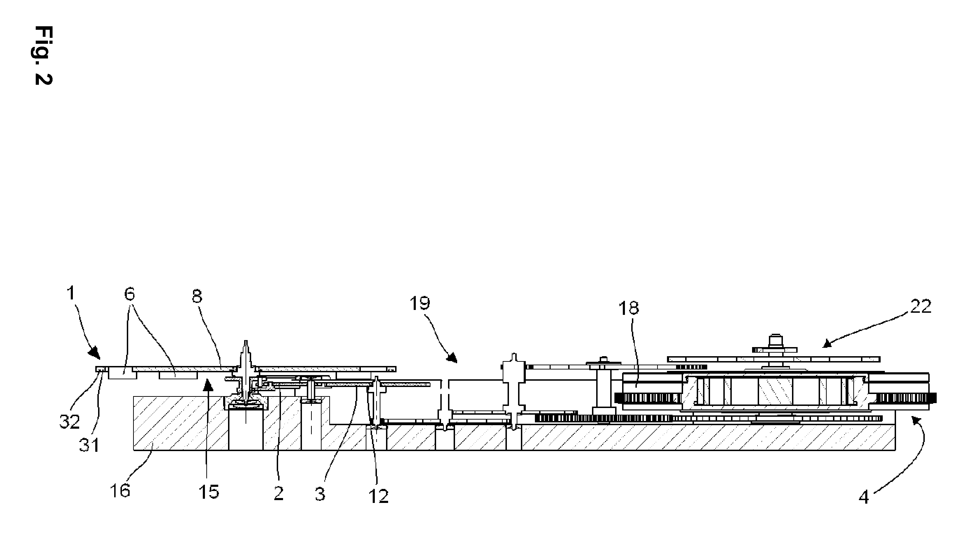

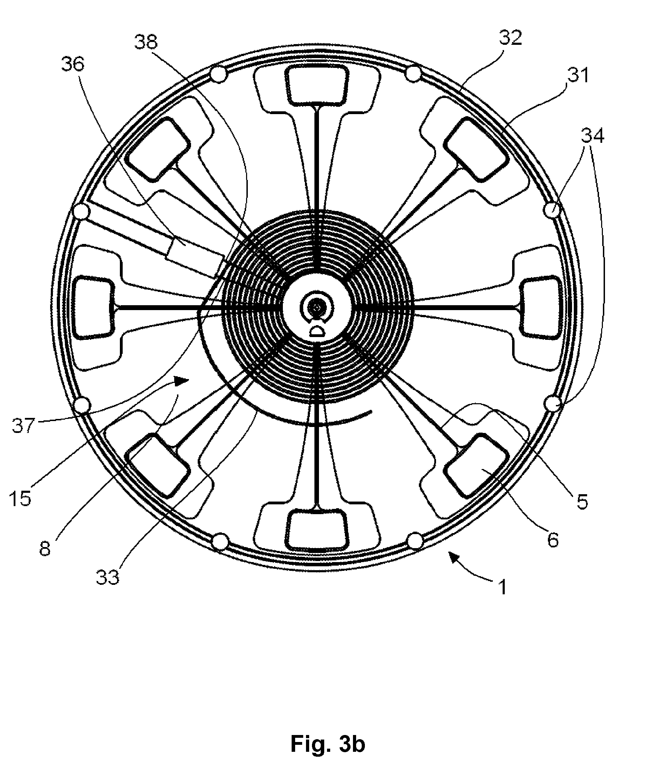

Ce dispositif comporte son propre oscillateur mécanique, similaire à celui d'un mouvement horloger mécanique, c'est-à-dire comprenant un balancier 1 associé à un spiral (visible sur la figure 3b) pour définir un balancier-spiral. Ce dernier est agencé pour coopérer avec un échappement comprenant une ancre 2 (figure 2) et une roue d'échappement 3.

De manière conventionnelle, la roue d'échappement 3 est reliée cinématiquement à une source d'énergie qui peut avantageusement prendre la forme d'un ressort logé dans un barillet 4 pour entretenir les oscillations du balancier-spiral. Bien entendu, toute autre forme de source d'énergie mécanique adaptée à la mise en oeuvre de l'invention, notamment un autre type de ressort, pourra être utilisée sans sortir du cadre de l'invention.

Selon l'invention, il est prévu que le dispositif générateur d'énergie électrique comporte une pluralité de micro-générateurs agencés pour produire de l'énergie électrique en réponse aux oscillations du balancier-spiral. Chacun de ces micro-générateurs comprend un organe élastique présentant la forme d'une poutre 5 portant une masse 6 à son extrémité libre et présentant des propriétés piézoélectriques. De tels micro-générateurs sont disposés directement sur le balancier 1, tel que cela ressort du schéma de la figure 1, ainsi que sur la roue d'échappement 3.

Le balancier 1 comprend un bâti central 8, sensiblement en forme de disque dans lequel sont découpées différentes ouvertures 9 et, portant ou non une serge à sa périphérie. A titre d'exemple non limitatif, on pourra notamment réaliser le bâti central en silicium.

Les ouvertures 9 définissent un moyeu central 10 du balancier à partir duquel s'étendent plusieurs poutres 5.

La roue d'échappement 3 présente une configuration similaire à celle du balancier à titre indicatif non limitatif. Sa périphérie comporte une denture 11 adaptée pour coopérer avec les palettes de l'ancre 2, tandis qu'elle présente un moyeu central 12 (figure 2) à partir duquel s'étendent plusieurs poutres 5.

Ainsi, lorsque le balancier-spiral est en régime oscillant, les poutres 5 portées par le balancier subissent des accélérations alternativement dans des premier et second sens de rotation, ce qui génère un mouvement de vibration de chaque poutre par rapport à son axe de symétrie. Ces vibrations entraînent l'application de contraintes mécaniques sur un matériau piézoélectrique (non représenté sur le schéma de la figure 1) déposé sur les poutres pour générer une tension électrique entre deux contacts électriques (non illustrés sur le schéma de la figure 1).

De manière similaire, la roue d'échappement 3 présente un mouvement périodique et les poutres agencées sur elle subissent des accélérations, d'une part, lorsqu'elle est libérée et, d'autre part, lorsqu'elle est à nouveau bloquée par l'ancre. Ces vibrations entraînent l'application de contraintes mécaniques sur un matériau piézoélectrique (non représenté sur le schéma de la figure 1) déposé sur ces poutres pour générer une tension électrique entre deux contacts électriques supplémentaires (non illustrés sur le schéma de la figure 1).

La tension électrique ainsi générée induit la production d'énergie électrique qui peut être mise à profit pour alimenter un système électrique, comme par exemple un système d'éclairage, un affichage à cristaux liquides, un système communiquant, préférablement de type RFID, et/ou un système permettant d'authentifier la pièce d'horlogerie. Bien entendu, d'autres systèmes électriques adaptés peuvent être mis en oeuvre, en alternative, sans sortir du cadre de l'invention.

La figure 2 représente une vue en coupe simplifiée d'un détail de construction du dispositif de la figure 1.

II ressort de la figure 2 que l'une 15 des faces du balancier 1 (celle qui ne sera pas visible pour le porteur d'une pièce d'horlogerie correspondante), notamment de son bâti central 8, peut être utilisée pour y agencer des composants électroniques (non représentés) du dispositif. Ces composants peuvent notamment comporter un circuit redresseur, le ou les organes de stockage mentionnés ci-dessus, ou encore tout autre composant électronique conventionnel que l'homme du métier pourra agencer en fonction de ses propres besoins, sans rencontrer de difficulté particulière et sans sortir du cadre de la présente invention.

Comme cela a été mentionné plus haut, le dispositif selon l'invention est avantageusement réalisé sous la forme d'un module additionnel destiné à être assemblé à un mouvement horloger de base.

Ainsi, le dispositif comprend un bâti 16 supportant l'oscillateur mécanique et l'échappement associé, de même que la source d'énergie mécanique.

Cette dernière peut préférablement prendre la forme d'un ressort logé dans un barillet 4 de construction sensiblement conventionnelle, notamment avec une première extrémité du ressort solidaire d'un arbre 17 (figure 1) du barillet et sa seconde extrémité solidaire d'un tambour 18 de barillet. Une première de ces extrémités est alors reliée cinématiquement à la roue d'échappement, par un rouage de finissage 19, tandis que l'autre extrémité est avantageusement reliée cinématiquement à un mécanisme de remontage permettant de recharger le ressort de barillet.

Le mécanisme de remontage peut comporter un organe de commande externe 20 (figure 1) relié cinématiquement à un rochet de barillet 21 (figure 1), solidaire de l'arbre de barillet, par l'intermédiaire d'un train de remontage multiplicateur 22.

L'organe de commande externe peut être de tout type connu adapté pour la mise en oeuvre de l'invention. De manière préférée, l'organe de commande externe peut être réalisé sous la forme d'une targette, le train de rouage multiplicateur étant adapté pour que la course de la targette, de l'ordre de plusieurs dizaines de degrés, permette de recharger entièrement le ressort de barillet.

On peut alors prévoir que, dès lors que le ressort de barillet est suffisamment chargé, le balancier-spiral est alimenté en énergie mécanique et se met à osciller.

L'inventeur a conduit des expériences démontrant que pour un balancier de diamètre de l'ordre de 10 à 15mm (à comparer aux 8-9mm habituels dans les mouvements horlogers courants), oscillant à une fréquence de l'ordre de 25Hz avec une amplitude de l'ordre de 90 degrés, et un rapport d'engrenage de l'ordre de 250 entre le barillet et la roue d'échappement, le barillet peut être dévidé en 3 à 8 minutes et conduire à une production d'énergie électrique suffisante pour alimenter un système d'éclairage à DEL pendant une durée allant de 1 à 3 minutes environ.

Toutefois, il est préférable de mettre en oeuvre un organe de stockage de l'énergie électrique dans la mesure où une fréquence d'oscillation, dans un dispositif tel que celui représenté, de l'ordre de plusieurs dizaines de hertz est a priori nécessaire pour produire une quantité d'énergie électrique suffisante pour alimenter directement un système d'éclairage à DEL.

En effet, la mise en oeuvre du dispositif de l'invention, avec en particulier huit poutres présentant chacune une longueur de 5.7mm et portant une masse de 8mg et une couche de matériau piézoélectrique dont l'épaisseur est d'environ 400nm, permet de produire une puissance de l'ordre de 7mW tandis qu'une puissance de l'ordre de 30mW est nécessaire pour faire fonctionner des DEL conventionnelles. Dans ces conditions, avec une amplitude d'oscillation du balancier de l'ordre de 90 degrés, on observe une amplitude de vibration des poutres de l'ordre de 1.5mm autour de leur position au repos.

Bien entendu, les données ci-dessus sont fournies uniquement à titre d'exemple et l'homme du métier pourra optimiser les différents paramètres du dispositif en fonction de ses besoins sans sortir du cadre de la présente invention.

On notera par exemple qu'une fréquence plus faible est suffisante pour alimenter un affichage à cristaux liquides qui nécessite une puissance pouvant être inférieure à une centaine de nW.

Lorsque l'alimentation du système électrique mis en oeuvre n'est pas directe à partir des micro-générateurs mais se fait par l'intermédiaire d'un organe de stockage, il est nécessaire de prévoir un organe de commande pour activer le fonctionnement du système électrique. Dans ce cas, on peut prévoir un organe de commande spécifique additionnel ou encore prévoir que l'organe de commande externe destiné à charger la source d'énergie mécanique peut être actionné d'au moins deux manières différentes, une première pour charger la source d'énergie mécanique et une seconde pour actionner le système électrique, sans sortir du cadre de l'invention.

Il est possible de prévoir que le circuit électronique est agencé de telle manière qu'il active automatiquement l'éclairage par les DEL lorsque la quantité d'énergie électrique stockée atteint une valeur prédéfinie, qui peut par exemple être choisie pour correspondre à un fonctionnement des DEL pendant 60 secondes.

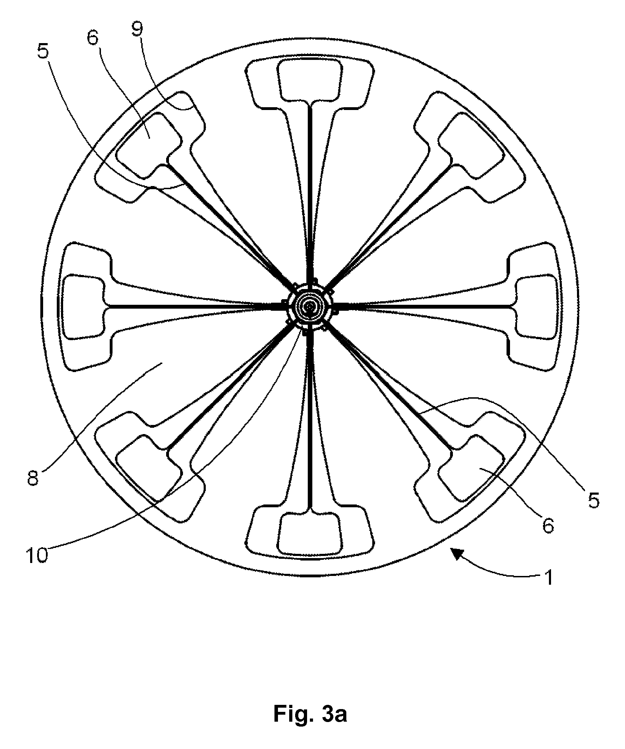

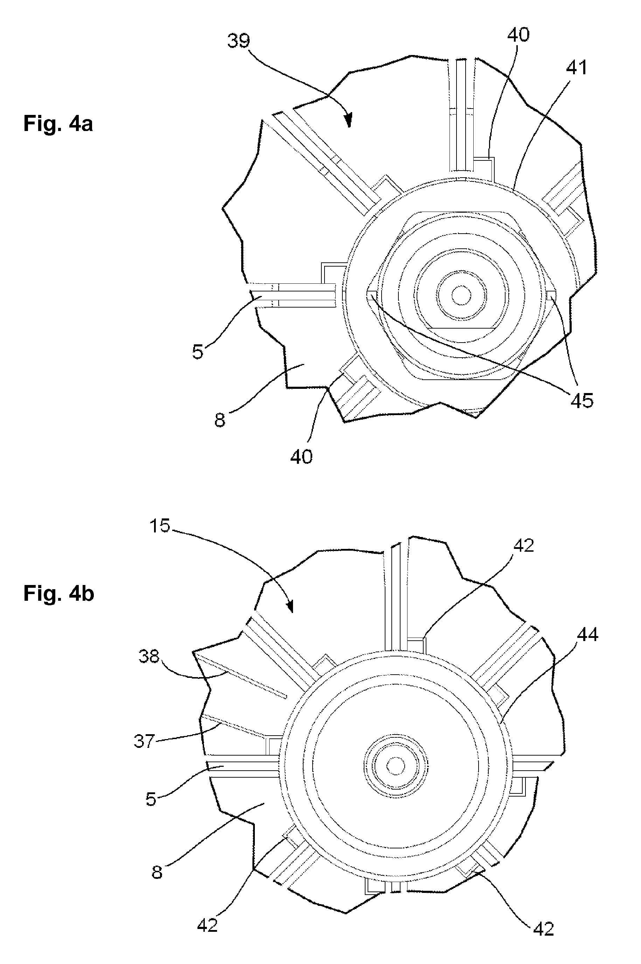

Les figures 3a, 3b, 4a et 4b représentent des vues schématiques des deux faces d'un balancier selon une variante de réalisation, les vues des figures 4a et 4b étant des agrandissements des détails A et B des figures 3a et 3b.

Le bâti central 8 du balancier comprend huit ouvertures 9 dans chacune desquelles est agencée une poutre 5, reliée au bâti central par son extrémité interne, présentant une symétrie radiale et portant une masse 6 à son extrémité externe.

Sur une première face 15 du balancier représentée sur la figure 3b, celle située ici du côté du spiral 33, des première et seconde pistes conductrices 31, 32 ont été imprimées à la périphérie du bâti central, tandis que des DEL 34 sont agencées sur ces pistes conductrices pour être alimentées en énergie électrique.

Les DEL 34 ont été représentées de manière schématique sur le balancier 1 mais des DEL supplémentaires peuvent également être agencées sur la roue d'échappement 3 ou sur l'ancre.

Ces DEL peuvent être alimentées directement à partir de l'énergie électrique produite par les micro-générateurs correspondants (c'est-à-dire notamment les DEL de la roue d'échappement par les micro-générateurs de la roue d'échappement et les DEL du balancier par les micro-générateurs du balancier) ou, de manière alternative, il est possible de prévoir que le dispositif selon l'invention comprend en outre un organe de stockage de l'énergie électrique produite, comportant par exemple un condensateur, les DEL étant dans ce cas alimentées à partir de cet organe de stockage.

Chacune des pistes conductrices est reliée à un circuit électronique 36 solidaire du bâti central et qui peut comprendre l'organe de stockage susmentionné. Deux pistes supplémentaires 37 et 38 sont prévues sur le bâti central pour récupérer l'énergie électrique produite par les micro-générateurs électriques au centre du bâti 8.

Les figures 4a et 4b permettent de mieux comprendre comment les connexions électriques peuvent être établies, à titre indicatif non limitatif.

Il ressort de la figure 4a que, sur la seconde face 39 du bâti central 8, chaque poutre 5 présente une première connexion électrique 40 avec un premier anneau central 41 porté par le balancier.

Il ressort de manière similaire de la figure 4b que, sur la première face 15 du bâti central 8, chaque poutre 5 présente une seconde connexion 42 avec un second anneau 44 porté par le bâti central, en étant isolé du premier anneau 41 d'un point de vue électrique.

La première piste 37 permet de relier le circuit électronique 36 au second anneau 44 tandis que la seconde piste 38 permet de le relier au premier anneau 41, par l'intermédiaire d'un trou adapté (non visible) du bâti central. Ainsi, l'énergie électrique produite par les micro-générateurs est retransmise aux DEL 34, par l'intermédiaire du circuit électronique 36 et des anneaux 41 et 44.

Une structure similaire peut être mise en oeuvre sur la roue d'échappement.

De manière alternative, on peut prévoir que les circuits électroniques ne sont pas portés directement par le balancier ou par la roue d'échappement. En effet, il est possible de prévoir des métallisations définissant des pistes conductrices sur les arbres correspondants permettant de conduire l'énergie électrique depuis les micro-générateurs jusqu'aux paliers dans lesquels le balancier et la roue d'échappement sont montés. Le contact électrique entre les anneaux 41 et 44 et l'arbre de balancier peut être réalisé par exemple au moyen de doigts 45 (figure 4a) solidaires de chaque anneau et disposés en appui contre l'arbre.

Ensuite, il est possible de prévoir des ressorts droits s'appuyant sur les extrémités des arbres, par exemple, pour assurer la connexion électrique depuis les pistes conductrices vers le bâti du dispositif.

Dans un tel cas de figure, on peut notamment mettre en oeuvre un système d'éclairage du cadran, à titre indicatif non limitatif.

La description qui précède s'attache à décrire des modes de réalisation particuliers à titre d'illustration non limitative et, l'invention n'est pas limitée à la mise en oeuvre de certaines caractéristiques particulières qui viennent d'être décrites, comme par exemple le nombre ou la forme des micro-générateurs. L'invention n'est pas limitée non plus aux dimensions indiquées uniquement à titre d'exemples.

Il est bien entendu possible de ménager les micro-générateurs uniquement sur le balancier ou uniquement sur la roue d'échappement sans sortir du cadre de l'invention. L'invention n'est pas non plus limitée à la mise en oeuvre d'un échappement à ancre.

En complément ou en alternative, il est également possible d'utiliser directement le ressort spiral 33 comme un micro-générateur. En effet, celui-ci peut être revêtu, de chaque côté, d'une couche de matériau piézoélectrique, tandis que l'une de ses extrémités est solidaire de l'arbre du balancier 1 et l'autre extrémité est solidaire d'un élément du bâti 16, de manière conventionnelle. Ainsi, des contacts électriques peuvent être ménagés pour alimenter un système électrique disposé soit sur le balancier soit sur le bâti 16, sans sortir du cadre de la présente invention. Les oscillations du balancier 1 vont provoquer des déformations importantes et périodiques du ressort spiral dont la couche piézoélectrique va, de ce fait, produire de l'énergie électrique qui pourra alimenter un système électrique, tel que décrit plus haut.

De manière générale, l'homme du métier ne rencontrera pas de difficulté particulière pour adapter le contenu de la présente divulgation à ses propres besoins et mettre en oeuvre une pièce d'horlogerie dont la construction reprend notamment les caractéristiques de l'invention, alors qu'elles sont mises en oeuvre en relation avec un système électrique différent de ceux qui ont été cités.

On rappellera que, de manière avantageuse, le dispositif générateur d'énergie électrique permet de produire de l'énergie électrique à la demande pour alimenter un système électrique et ce, indépendamment du fonctionnement d'un mouvement horloger de base auquel il est associé.

## Revendications

1. Dispositif générateur d'énergie électrique pour appareil portable, destiné à produire de l'énergie électrique à partir d'une source d'énergie mécanique (4), comportant un organe mobile (1, 3), une source d'énergie mécanique (4) reliée mécaniquement audit organe mobile pour en entraîner le mouvement,
**caractérisé en ce que** ledit organe mobile est agencé pour présenter un mouvement périodique de fréquence sensiblement prédéfinie, et
**en ce que** le dispositif comprend au moins un micro-générateur électrique (5, 33) et au moins deux contacts électriques (41, 44) reliés audit micro-générateur électrique et entre lesquels une tension électrique est susceptible d'être générée, ledit micro-générateur électrique étant agencé pour produire de l'énergie électrique en réponse audit mouvement périodique dudit organe mobile.

2. Dispositif selon la revendication 1, **caractérisé en ce que** ledit micro-générateur électrique comprend un organe élastique (5, 33) présentant des propriétés piézoélectriques et agencé de manière à se déformer en réponse audit mouvement périodique dudit organe mobile (1, 3).

3. Dispositif selon la revendication 1 ou 2, **caractérisé en ce qu'**il comporte un bâti (16) susceptible d'être assemblé à un mouvement horloger.

4. Dispositif selon la revendication 3, **caractérisé en ce qu'**il est agencé pour fonctionner de manière autonome.

5. Dispositif selon l'une quelconque des revendications précédentes, **caractérisé en ce que** ladite source d'énergie mécanique comprend un barillet (4) logeant un ressort susceptible d'être chargé par un utilisateur.

6. Dispositif selon l'une quelconque des revendications précédentes, **caractérisé en ce que** ledit organe mobile comprend un balancier (1) associé à un spiral (33), définissant un balancier-spiral susceptible de présenter des oscillations périodiques, et **en ce que** le dispositif comporte un échappement (2, 3) agencé pour coopérer avec ledit balancier-spiral pour lui transmettre l'énergie mécanique reçue de ladite source d'énergie mécanique (4) et en entretenir les oscillations.

7. Dispositif selon la revendication 6, **caractérisé en ce que** ledit micro-générateur électrique (5, 33) est au moins partiellement solidaire dudit balancier (1).

8. Dispositif selon la revendication 6, ledit échappement comportant une ancre (2) et une roue d'échappement (3), **caractérisé en ce que** ledit micro-générateur électrique (5) est agencé sur ladite ancre ou sur ladite roue d'échappement.

9. Dispositif selon l'une quelconque des revendications précédentes, **caractérisé en ce qu'**il comprend un organe de commande (20) relié à ladite source d'énergie mécanique (4) et agencé pour la charger en réponse à une action d'un utilisateur.

10. Dispositif selon l'une quelconque des revendications précédentes, **caractérisé en ce qu'**il comprend en outre un organe (36) de stockage d'énergie électrique relié électriquement auxdits contacts électriques (41, 44).

11. Dispositif selon l'une quelconque des revendications précédentes, **caractérisé en ce que** ladite fréquence prédéfinie d'oscillation dudit organe mobile (1, 3) est au moins égale à 4Hz, préférablement au moins égale à 20Hz.

12. Dispositif selon l'une quelconque des revendications 2 à 11, **caractérisé en ce que** ledit organe élastique comprend une poutre (5) portant une couche de matériau piézoélectrique.

13. Appareil portable comportant un dispositif générateur d'énergie électrique selon l'une quelconque des revendications précédentes et un système électrique (34) agencé pour fonctionner à partir de l'énergie électrique produite par ledit dispositif générateur d'énergie électrique.

14. Appareil portable selon la revendication 13, lorsque ledit dispositif générateur d'énergie électrique comprend un barillet (4) logeant un ressort susceptible d'être chargé par un utilisateur, **caractérisé en ce qu'**il comporte un organe de commande externe (20) susceptible d'être actionné par l'utilisateur pour charger ledit ressort et activer la production d'énergie électrique.

15. Appareil portable selon la revendication 13 ou 14, **caractérisé en ce que** ledit système électrique comprend un système d'éclairage (34), un affichage à cristaux liquides, un système communiquant, préférablement de type RFID, et/ou un système permettant d'authentifier l'appareil portable.
